# EUROPEAN PATENT SPECIFICATION

(11) **EP 0 554 617 B1**
(45) Date of publication and mention of the grant of the patent: **13.03.1996**
(21) Application number: 92311097.7
(22) Date of filing: 04.12.1992
(51) Int. Cl.: H01M 4/38

(54) **Active material of hydrogen storage alloy electrode**
Aktives Material von einer Elektrode aus Wasserstoffspeicherlegierung
Matériau actif d'une électrode en alliage emmagasinant l'hydrogène

(30) Priority: 08.01.1992 CN 92100029
(43) Date of publication of application: 11.08.1993
(73) Proprietor: NANKAI UNIVERSITY, Nankai Qu, Tianjin, P.R. (CN)
(72) Inventor: Zhang,Yushi, NanKai University (CN); Song,Deying, NanKai University (CN); Chen,Youxiao, TianJin (CN); Chen,Jun, NanKai University (CN); Wang,Genshi, NanKai University (CN); Yuan,Huatang, NanKai University (CN); Zhou,Zuoxiang, NanKai University (CN); Cao,Xuejun, NanKai University (CN); Zang,Taoshi, NanKai University (CN); Zhang,Daxin, NanKai University (CN)
(74) Representative: Woods, Geoffrey Corlett

(56) References cited:
- EP-A- 0 149 846
- EP-A- 0 341 782

## Description

This invention relates to a hydrogen storage alloy electrode, and particularly to an active material of hydrogen storage alloy electrode.

Many researches during the past twenty or more years have been undertaken on selecting the active material which may be used for preparing a hydrogen storage alloy electrode. The LaNi₅ alloy was chosen initially but the life of the alkaline batteries assembled with electrodes prepared from the LaNi₅ alloy was too short. To improve the alkaline batteries, many compositions have been given, such as Iwakura, C. disclosed in Journal of the Less Common Metals 159, 127 (1990), who substituted Co for part of Ni in LaNi₅ to prepare an LaNi₅₋ₓCOₓ ternary alloy. A recent representative improvement is the alloy with the composition MmNi₃₈Co_{0.5}Mn_{0.3}Al_{0.3} as described in JP63-175339 and JP63-264869 (1988). However, the cycle lives of alkaline batteries assembled with electrodes prepared from alloys of the above-mentioned LaNi₅ system or the titanium system, zirconium system or calcium system are still not ideal up to now.

It has been found by analysis that the cause lies not only in the stability of the active material itself of the hydrogen storage alloy anode, but also with the nickel oxide cathode of this kind of alkaline battery which suffers from corrosion by the electrolyte during the charge - discharge process and the corrosion reaction may be aggravated in pace with the increase of charge - discharge times. The measure adopted generally is to add LiOH at a specific ratio to the KOH electrolyte before sealing the battery so as to protect the nickel oxide cathode. Nevertheless, the effect of this protective measure is not satisfactory. If the LiOH concentration of the electrolyte is raised along with the cycles of the charge - discharge process, the effect of the cathode protection should be improved apparently and the cycle life of the battery should be prolonged greatly. However, it is impossible to add LiOH in the charge - discharge process after sealing up the battery.

EP-A-341782 describes an electrochemical cell comprising a negative electrode whose electrochemically active material includes an intermetallic compound which can form a hydride with hydrogen, the cell comprising an electrolyte of a solution of at least one alkali hydroxide in water, the negative electrode being provided with a discharge buffer by introducing a quantity of an alkali metal, alkaline earth metal or aluminium into the cell before the cell is sealed, the quantity corresponding to the desired quantity of hydrogen in the negative electrode in the uncharged condition of the cell.

EP-A-149846 describes a hermetically sealed metallic oxide-hydrogen battery comprising a metallic oxide as a positive electrode active material and hydrogen as a negative electrode active material, characterised in that the negative electrode is composed of a hydrogen storage alloy represented by the formula:

MNi_{5-(x+y)} MnₓAl_{y}

wherein M is a mischmetal, a lanthanum element or a lanthanum-rich mischmetal; and x and y are values satisfying relations of: 0 < x < 1, 0 < y < 1 and 0.2 ≤ x + y ≤ 1 respectively. Internal pressure of this battery does not increase even when a charged/discharge cycle has been carried out for a long period of time, and a discharge capacity can be maintained at a high level over a prolonged period.

This invention provides novel active materials of hydrogen storage alloy. The alloy anode prepared from the active materials can release alkali metal ions M⁺ continuously in the charge - discharge process of the alkaline battery made with the alloy anode.

The invention also provides a new type of alkaline battery with a prolonged cycle life.

According to the present invention the corrosion of the cathode can be greatly reduced by adding an alkali metal element to the composition of active material of the hydrogen storage alloy. The invention is particularly applicable when the alkaline battery is sealed from the atmosphere.

The present invention is generally applicable throughout the field of hydrogen storage alloy. According to the invention, the alkali metal element may be added to the composition of a hydrogen storage alloy to form a composition of formula:

GDᵤ (I)

wherein G is the composition of a hydrogen storage alloy selected from a rare earth system such as (LaNi₅, a titanium system such as TiNi, a calcium system such as (CaNi₅, or a zirconium system such as (ZrMn₂, D is the alkali metal element Li, and u is larger than or equal to 0.01.

In particular, the compositions of hydrogen storage alloy in rare earth system have the following formula:

MmNi_{(5-x-y-z-u)}AₓB_{y}C_{z}Dᵤ (II)

wherein Mm is mischmetal; A=Mn, Sn or V; B=Cr, Co, Ti, Nb, Zr or Si; C=Al, Mg or Ca; D=Li; 0 ≤ x ≤ 0.95, 0 ≤ y ≤ 1, 0 ≤ z ≤ 0.7, and 0.01≤ u ≤ 0.9.

We have found that the structure of the alloy can be improved by the addition of alkali metal such as Li. The alkali metal added is capable of forming manifold stable alloy phases with elements such as Ni, Mn, Al, etc. and dispersing partially in the crystal field of the alloy. When an electrode prepared from the alloy is immersed in an electrolyte, the alkali metal atoms situated in the defective positions of the phase are first oxidized to form hydroxide. This hydroxide (especially LiOH) has a protective effect for the cathode of the battery, such as nickel oxide cathode. In pace with the cycles of the charge - discharge process, the alkali metal atoms of the alloy are transformed into the hydroxide continuously and increase the concentration of the hydroxide correspondingly; they thus further improve the protection effect for the nickel oxide cathode. In the meantime, the hydroxide formed on the surface of the hydrogen storage alloy anode is distributed on the defective positions of the alloy surface, which also protects the hydrogen storage alloy from being oxidized, with the result that the cycle life of the battery is greatly prolonged. Because of the improvement of the alloy composition and the MOH formed in the charge - discharge process has a relatively high activity, the catalysis activity and the electrochemical capacity of the hydrogen storage alloy material are improved simultaneously. The experiments of gas - solid reaction indicate that the plateau pressure of the alloy is moderate.

It is better that, in formula (II), A is Mn, x is from about 0.3 to about 0.55, y is about from 0.3 to 0.5, and z is about from 0.2 to 0.3.

According to the present invention, the compositions of hydrogen storage alloy in TiNi system have the following formula:

TiNi₍₁₋ᵤ₎Dᵤ (III)

wherein D is Li; and 0.01 ≤ u ≤ 0.9.

Other preferred compositions of hydrogen storage alloy of the invention are those of formula II wherein A = Sn, B = Nb, C = Al, D = Li, x = 0.4, y = 0.1, z = 0.1, and u = 0.8; or A = Mn, B = Zr, D = Li, x = 0.4, y = 0.3, z = 0, and u = 0.9; or A = Mn, B = Ti, D = Li, x = 0.5, y = 0.2, z = 0, and u = 0.9; or A = Mn, B = Si, D = Li, x = 0.5, y = 0.3, z = 0, and u = 0.9; or D = Li, x = 0, y = 0, z = 0, and u = 0.9; or B = Co or Nb, D = Li, x = 0, y = 0.5, z = 0, and u = 0.9.

A hydrogen storage alloy electrode according to the invention uses the active material described above. And an alkaline battery with a prolonged cycle life is also provided by using the hydrogen storage alloy electrode.

The active material of hydrogen storage alloy of the present invention may be prepared in a vacuum induction furnace by a conventional method. The intermetallic alloy formed from the alkali metal ensures the stability of the added components of the alloy.

In contrast to the existing technique, the cycle life of alkaline batteries assembled using electrodes prepared from the active material of the present invention can be prolonged 2-3 times. The normal temperature discharge capacity and the energy density are obviously improved (see Table 1), the high rate discharge performance is also improved (see Table 2), and the maximum charge - discharge capacity can be achieved after only 3-5 activation treatments (see Table 3).

The following Examples illustrate the invention.

### Example 1

The active material of the hydrogen storage alloy, prepared in a vacuum induction furnace and having the composition Mm Ni_{3.8}Co_{0.5}Mn_{0.4}Al_{0.2}Li_{0.1}, was pulverized to 300-400 mesh by a vibrational mill, and made up with a PTFE solution of 100:8 weight to form a paste. The paste was rolled several times at 60°C to give an alloy powder sheet of 0.4 mm thickness. The sheet was pressed under 100 MPa (1 ton/cm) pressure on to a conductive nickel base of suitable size for the base of a battery case to prepare the alloy electrode. It was then assembled with a nickel oxide cathode, 5M KOH+1M LiOH electrolyte solution and a nonwoven nylon separator to form a sealed AA type alkaline battery (A). The cycle life was measured by the IEC standard. The battery capacity fell only 3.6% after 200 charge - discharge cycles. The rate of fall of the capacity averaged 0.018% per cycle. However, in the case of an alkaline battery (B) prepared from a MmNi_{3.8}Co_{0.5}Mn_{0.4}Al_{0.3} alloy by the same technique and examined under the same conditions, the battery capacity fell 8.4% and rate of fall averaged 0.042%. The data contrasting the discharge capacity and energy density of the batteries A and B are listed in Table 1 below.

**Table 1**

| Discharge capacity and energy density of AA type alkaline batteries assembled with two kinds of active material (C = electrochemical capacity) : | | | | | | |
|---|---|---|---|---|---|---|
| Discharge Multiple Rate | Discharge Capacity mAh | | Energy Density | | | |
| | | | Wh/kg | | Wh/L | |
| | A | B | A | B | A | B |
| 0.2C | 1236 | 1148 | 58.9 | 55.4 | 192.0 | 175.5 |
| 1 C | 1070 | 1046 | 5.10 | 50.3 | 166.3 | 158.6 |
| 3 C | 966 | 956 | 45.5 | 45.3 | 148.6 | 147.8 |
| 5 C | 912 | 911 | 43.1 | 43.1 | 141.8 | 141.2 |

### Example 2

The active material of the hydrogen storage alloy with the composition of MmNi_{3.0}Mn_{0.4}Co_{0.5}Al_{0.2}Li_{0.9} was pulverized to 300-400 mesh by a vibrational mill and made up with 2% PVA solution to form a paste. 1g of the alloy paste was packed on to a 2 X 2 cm foam nickel plate of 1.2 mm thickness and pressed under 200 MPa (2 ton/cm) pressure to prepare a hydrogen storage alloy electrode (C). The latter was put into 5M KOH solution, and assembled with a nickel oxide cathode and an Hg/HgO reference electrode, charged 16 hr with 0.1C, and discharged at differential multiple rates. Its electrochemical capacity was examined and contrasted with that of electrode (B). The data are listed in Table 2 below.

**Table 2**

| Discharge capacity of two kinds of alloy material (1g alloy) | | |
|---|---|---|
| Discharge Multiple Rate | Discharge capacity (mAh) | |
| | C | B |
| 0.2c | 302 | 290 |
| 1 C | 266 | 254 |
| 3 C | 242 | 231 |
| 5 C | 220 | 206 |

### Example 3

The active material of the hydrogen storage alloy, with the composition of MmNi_{3.4}Co_{0.5}Mn_{0.3}Al_{0.1}Li_{0.8} made in a vacuum induction furnace, was prepared as in Example 1, to form a sealed AA type alkaline battery (D). After the battery had been sealed up, only 3 times of activation were necessary to reach the normally demanded discharge capacity index. The activation times are reduced by threefold in relation to battery (B). The activation times of the batteries D and B are listed in Table 3 below.

**Table 3**

| The activation times of AA type alkaline batteries assembled with two kinds of active material | | | | | |
|---|---|---|---|---|---|
| Discharge Times | Discharge Capacity mAh | | Discharge Times | Discharge Capacity mAh | |
| | D | B | | D | B |
| 1 | 930 | 570 | 7 | 1150 | 932 |
| 2 | 974 | 760 | 8 | 1154 | 967 |
| 3 | 1076 | 820 | 9 | 1174 | 990 |
| 4 | 1117 | 848 | 10 | 1200 | 1010 |
| 5 | 1120 | 886 | 11 | 1202 | 1023 |
| 6 | 1134 | 916 | 12 | 1202 | 1023 |

### Example 4

The active material of the hydrogen storage alloy with the composition of Ti₂Ni_{0.96}Li_{0.04} made in a vacuum induction furnace, was prepared by the method of example 1 to form a sealed AA type alkaline battery. The cycle life was examined by the IEC standard. The battery capacity fell only 8.46% after 200 charge-discharge cycles, the capacity descent rate averaged 0.043% per cycle, but in the case of the alkaline battery prepared from Ti₂Ni alloy by the same technique and examined by the same method, the capacity descent rate averaged 0.12% to the cycle.

### Example 5

The active material of the hydrogen storage alloy with the composition of Ti₂Ni_{0.55}Li_{0.45} made in a vacuum induction furnace at 1450°C to 1500°C, was pulverized to 35 µm in diameter by a vibrational mill. 6g of the pulverized active material mixed with 2% by weight of PTFE, based on the weight of the active material, were coated on a foam nickel plate with size of 4 X 8 cm to form an anode. A sealed AA type alkaline battery was assembled with the anode and a nickel oxide cathode. The data of discharge capacity of the alkaline battery are listed in

**Table 4**

| Discharge capacity of the alkaline battery | |
|---|---|
| Discharge Multiple Rate | Discharge Capacity (mAh) |
| 0.1C | 1300 |
| 0.2C | 1180 |
| 1C | 1060 |

## Claims

1. An active material of hydrogen storage alloy electrode having an intermetallic alloy composition of general formula:
GDᵤ,
wherein G is a hydrogen storage alloy composition selected from a rare earth system such as (LaNi₅, a titanium system such as TiNi, a calcium system such as (CaNi₅ and a zirconium system such as (ZrMn₂; D is Li; and u is larger than or equal to 0.01.

2. An active material of hydrogen storage alloy electrode according to claim 1 having a composition of formula
MmNi_{(5-x-y-z-u)}AₓB_{y}C_{z}Dᵤ
wherein Mm is mischmetal; A = Mn, Sn or V; B = Cr, Co, Ti, Nb, Zr or Si; C = Al, Mg or Ca; D = Li; 0 ≤ x ≤ 0.95, 0 ≤ y ≤ 1, 0 ≤ z ≤ 0.7, and 0.01 ≤ u ≤ 0.9.

3. An active material according to claim 2 wherein A = Mn, x is from 0.3 to 0.55, y is from 0.3 to 0.5, and z is from 0.2 to 0.3.

4. An active material of hydrogen storage alloy electrode according to Claim 1 having a composition of formula
Ti₂Ni₍₁₋ᵤ₎Dᵤ
wherein D = Li; and 0.01 ≤ u ≤ 0.9.

5. An active material according to Claim 2 wherein A = Mn, B = Co, C = Al, D = Li, 0 ≤ x ≤ 0.5, 0 < y ≤ 0.5, 0 < z ≤ 0.4, and 0.01 ≤ u ≤ 0.9.

6. An active material according to Claim 5 wherein x = 0.4, y = 0.5, z = 0.2, and u = 0.1.

7. An active material according to Claim 5 wherein x = 0.4, y = 0.5, z = 0.2 and, u = 0.9.

8. An active material according to Claim 5 wherein x = 0.3, y = 0.5, z = 0.1, and u = 0.8.

9. An active material according to Claim 4 wherein u = 0.04.

10. An active material according to Claim 4 wherein u = 0.45.

11. An active material according to Claim 2 wherein A = Sn, B = Nb, C = Al, D = Li, x = 0.4, y = 0.1, z = 0.1, and u = 0.8; or A = Mn, B = Zr, D = Li, x = 0.4, y = 0.3, z = 0, and u = 0.9; or A = Mn, B = Ti, D = Li, x = 0.5, y = 0.2, z = 0, and u = 0.9; or A = Mn, B = Si, D = Li, x = 0.5, y = 0.3, z = 0, and u = 0.9; or D = Li, x = 0, y = 0, z = 0, and u = 0.9; or B = Co or Nb, D = Li, x = 0, y = 0.5, z = 0, and u = 0.9.

12. An hydrogen storage alloy electrode wherein the active material has the composition of any one of claims 1 to 11.

## Patentansprüche

1. Aktives Material einer Wasserstoffspeicherlegierungselektrode mit einer intermetallischen Legierungszusammensetzung der allgemeinen Formel:
GDᵤ,
wobei G für eine Wasserstoffspeicherlegierungszusammensetzung steht, ausgewählt aus einem seltenen Erdensystem wie LaNi₅, einem Titansystem wie TiNi, einem Calciumsystem wie CaNi₅ oder einem Zirkoniumsystem wie ZrMn₂; D ist Li; und u ist größer oder gleich 0,01.

2. Aktives Material einer Wasserstoffspeicherlegierungselektrode nach Anspruch 1 mit einer Zusammensetzung der Formel
MmNi_{(5-x-y-z-u)}AₓB_{y}C_{z}Dᵤ
wobei Mm für Mischmetall steht; A = Mn, Sn oder V; B = Cr, Co, Ti, Nb, Zr oder Si; C = Al, Mg oder Ca; D = Li; 0 ≤ x ≤ 0,95, 0 ≤ y ≤ 1, 0 ≤ z ≤ 0,7 und 0,01 ≤ u ≤ 0,9.

3. Aktives Material nach Anspruch 2, wobei A = Mn, x geht von 0,3 bis 0,55, y geht von 0,3 bis 0,5 und z geht von 0,2 bis 0,3.

4. Aktives Material einer Wasserstofflegierungselektrode nach Anspruch 1 mit einer Zusammensetzung der Formel
Ti₂Ni₍₁₋ᵤ₎Dᵤ
wobei D = Li; und 0,01 ≤ u ≤ 0,9.

5. Aktives Material nach Anspruch 2, wobei A = Mn, B = Co, C = Al, D = Li, 0 ≤ x ≤ 0,5, 0 < y ≤ 0,5, 0 < z ≤ 0,4 und 0,01 ≤ u ≤ 0,9.

6. Aktives Material nach Anspruch 5, wobei x = 0,4, y = 0,5, z = 0,2 und u = 0,1.

7. Aktives Material nach Anspruch 5, wobei x = 0,4, y = 0,5, z = 0,2 und u = 0,9.

8. Aktives Material nach Anspruch 5, wobei x = 0,3, y = 0,5, z =0,1 und u = 0,8.

9. Aktives Material nach Anspruch 4, wobei u = 0,04.

10. Aktives Material nach Anspruch 4, wobei u = 0,45.

11. Aktives Material nach Anspruch 2, wobei A = Sn, B = Nb, C = Al, D = Li, x = 0,4, y = 0,1, z = 0,1 und u = 0,8; oder A = Mn, B = Zr, D = Li, x = 0,4, y = 0,3, z = 0 und u = 0,9; oder A = Mn, B = Ti, D = Li, x = 0,5, y = 0,2, z = 0 und u = 0,9; oder A = Mn, B = Si, D = Li, x = 0,5, y = 0,3, z = 0 und u = 0,9; oder D = Li, x = 0, y = 0, z = 0 und u = 0,9; oder B = Co oder Nb, D = Li, x = 0, y = 0,5, z = 0 und u = 0,9.

12. Masserstoffspeicherlegierungselektrode, wobei das aktive Material die Zusammensetzung nach einem der Ansprüche 1 bis 11 aufweist.

## Revendications

1. Un matériau actif d'une électrode en alliage emmagasinant l'hydrogène est composé d'un alliage intermétallique de formule générale:
GD_{u ,}
dans lequel G est un alliage emmagasinant l'hydrogène sélectionné à partir d'un système à terre rare tel que le LaNi₅, un système au titane tel que le TiNi, un système au calcium tel que le CaNi₅ et un système au zirconium tel que le ZrMn₂; D est Li; et u est plus grand ou égal à 0,01.

2. Un matériau actif d'une électrode en alliage emmagasinant l'hydrogène selon la revendication 1, ayant la formule de composition :
MmNi_{(5-x-y-z-u)}AₓB_{y}C_{z}Dᵤ,
dans laquelle Mm est un métal d'alliage; A est en Mn, Sn ou V; B est en Cr, Co, Ti, Nb, Zr ou Si; C est en Al, Mg ou Ca; D est en Li; x est compris entre 0 et 0,95, y est compris entre 0 et 1, z est compris entre 0 et 0,7 , et u est compris entre 0,01 et 0,9.

3. Un matériau actif selon la revendication 2, dans lequel A est en Mn, x est compris entre 0,3 et 0,55, y est compris entre 0,3 et 0,5 et z est compris entre 0,2 et 0,3.

4. Un matériau actif d'une électrode en alliage emmagasinant l'hydrogène selon la revendication 1, dans laquelle l'alliage a une formule de composition:
Ti₂Ni₍₁₋ᵤ₎Dᵤ
dans lequel D est en Li; et u est compris entre 0,01 et 0,9.

5. Un matériau actif selon la revendication 2, dans lequel A est en Mn, B est en Co, C est en Al, D est en Li, x est compris entre 0 et 0,5, y est supérieur à 0 et inférieur ou égal à 0,5, z est supérieur à 0 et inférieur ou égal à 0,4 et u est compris entre 0,01 et 0,9.

6. Un matériau actif selon la revendication 5, dans lequel x = 0,4, y = 0,5, z = 0,2 et u = 0,1.

7. Un matériau actif selon la revendication 5, dans lequel x = 0,4, y = 0,5, z = 0,2 et u = 0,9.

8. Un matériau actif selon la revendication 5, dans lequel x = 0,3, y = 0,5, z = 0,1 et u = 0,8.

9. Un matériau actif selon la revendication 4, dans lequel u = 0,04.

10. Un matériau actif selon la revendication 4, dans lequel u = 0,45.

11. Un matériau actif selon la revendication 2, dans lequel A est en Sn, B est en Nb, C est en Al, D est en Li, x = 0,4, y = 0,1, z = 0,1 et u = 0,8; ou A est en Mn, B est en Zr, D est en Li, x = 0,4, y = 0,3, z = 0 et u = 0,9; ou A est en Mn, B est en Ti, D est en Li, x = 0,5, y = 0,2, z = 0 et u = 0,9; ou A est en Mn, B est en Si, D est en Li, x = 0,5, y = 0,3, z = 0 et u = 0,9; ou D est en Li, x = 0, y = 0, z = 0 et u = 0,9;ou B est en Co ou en Nb, D est en Li, x = 0, y = 0,5, z = 0 et u = 0,9.

12. Une électrode en alliage emmagasinant l'hydrogène dans laquelle le matériau actif a la composition de l'une quelconque des revendications 1 à 11.
